# EUROPÄISCHE PATENTSCHRIFT

(11) **EP 1 860 331 B1**
(45) Veröffentlichungstag und Bekanntmachung des Hinweises auf die Patenterteilung: **15.07.2009**
(21) Anmeldenummer: 07007942.1
(22) Anmeldetag: 19.04.2007
(51) Int. Cl.: F16B 12/20

(54) **Beschlagvorrichtung zum Verbinden von zwei Möbelteilen**
Fitting for linking two pieces of furniture
Dispositif d'armature destiné à relier deux parties d'un meuble

(30) Priorität: 24.05.2006 DE 102006024265
(43) Veröffentlichungstag der Anmeldung: 28.11.2007
(73) Patentinhaber: Festool GmbH, 73240 Wendlingen (DE)
(72) Erfinder: Schmid, Jürgen, 88682 Salem (DE); Reines, Wolfgang, 72655 Altdorf (DE)
(74) Vertreter: Bregenzer, Michael

(56) Entgegenhaltungen:
- EP-A- 1 008 767
- EP-A1- 0 180 965
- WO-A-98/40634
- DE-U1- 20 302 693
- DE-U1-3202004 000 47
- DE-U1-8202006 002 64
- GB-A- 2 305 226

## Beschreibung

Die Erfindung betrifft eine Beschlagvorrichtung zum Verbinden von zwei Möbelteilen gemäß dem Oberbegriff des Anspruchs 1.

Aus DE 20 2006 002 648 U1 geht eine derartige Beschlagvorrichtung hervor. Die bekannte Beschlagvorrichtung enthält Beschlagteile mit einem im Wesentlichen runden Außenumfang, die in korrespondierende Aufnahmeausnehmungen an Hohlplatten eingesetzt werden.

Bei einer aus der CH 687 220 A5 bekannten Beschlagvorrichtung dieser Art werden die Spannmittel von zwei an einem der Beschlagteile vorstehend angeordneten Ankergliedern in Form biegeelastischer Schäfte gebildet, denen eine sich zunächst verengende und anschließend erweiternde Ausnehmung am anderen Beschlagteil zugeordnet ist. Drückt man die beiden Beschlagteile und somit die beiden Möbelteile gegeneinander, verrasten die Ankerglieder in der Ausnehmung, so dass sich ein fester, nicht mehr lösbarer Zusammenhalt der Beschlagteile ergibt.

Zu Transport- oder Lagerzwecken ist es jedoch erwünscht, Möbel zerlegen zu können.

Beschlagvorrichtungen, bei deren Verwendung die Möbelteile wieder voneinander getrennt werden können, sind zwar an sich bekannt, so beispielsweise aus der DE 85 32 496 U1. In diesem Falle wird in eines der Möbelteile ein Spannbolzen eingeschraubt, der in eine am anderen Möbelteil angeordnete Steckausnehmung eingesteckt und mittels eines im anderen Möbelteil verdrehbar angeordneten Spannelements in Gestalt eines Drehriegels mit exzentrisch verlaufender Spannfläche in das andere Möbelteil hineingezogen wird.

Bei dieser Beschlagvorrichtung besteht jedoch die Gefahr, dass der Spannbolzen ausreißt oder sich beim Auftreten von Querkräften in Folge eines Nachgebens des Materials des betreffenden Möbelteils schräg stellt. Ferner wird im anderen Möbelteil die Spannkraft vom Drehriegel unmittelbar in das andere Möbelteil eingeleitet. Auch dies ist kräftemäßig nicht besonders stabil. Außerdem kann es vorkommen, dass im verspannten Zustand das Material des Möbelteils unter dem vom Drehriegel ausgeübten Druck im Laufe der Zeit nachgibt, so dass die Verspannung lockert.

Ausgehend hiervon liegt der vorliegenden Erfindung die Aufgabe zu Grunde, eine Beschlagvorrichtung der eingangs genannten Art zu schaffen, mit der sich zwei Möbelteile dauerhaft stabil und auch großen Belastungen standhaltend lösbar miteinander verbinden lassen.

Diese Aufgabe wird erfindungsgemäß durch eine Beschlagvorrichtung gemäß der technischen Lehre des Anspruchs 1 gelöst

Bei der Beschlagvorrichtung werden die beiden Beschlagteile aufgrund ihrer im Außenquerschnitt länglichen Gestalt unverdrehbar in den Möbelteilen gehalten und liegen großflächig an der Wandung der Aufnahmeausnehmungen an, so dass sich eine entsprechend große Stabilität insbesondere gegen Querkräfte ergibt. Ferner wird der Spannbolzen vom ersten Beschlagteil und somit unabhängig vom Material des betreffenden Möbelteils gehalten. Des weiteren wird das Spannelement nicht unmittelbar im betreffenden Möbelteil sondern im zweiten Beschlagteil gelagert, was ebenfalls zur dauerhaft festen Verbindung beiträgt.

Bei alledem ist die zwischen den Möbelteilen hergestellte Verbindung wieder lösbar, in dem man das Spannelement aus seiner die Verspannung bewirkenden Spannstellung zurückbewegt, so dass der Spannbolzen freikommt.

Zweckmäßige Ausgestaltungen der Erfindung sind in den Unteransprüchen angegeben.

Nachstehend wird ein Ausführungsbeispiel der Erfindung anhand der Zeichnung erläutert. Es zeigen:

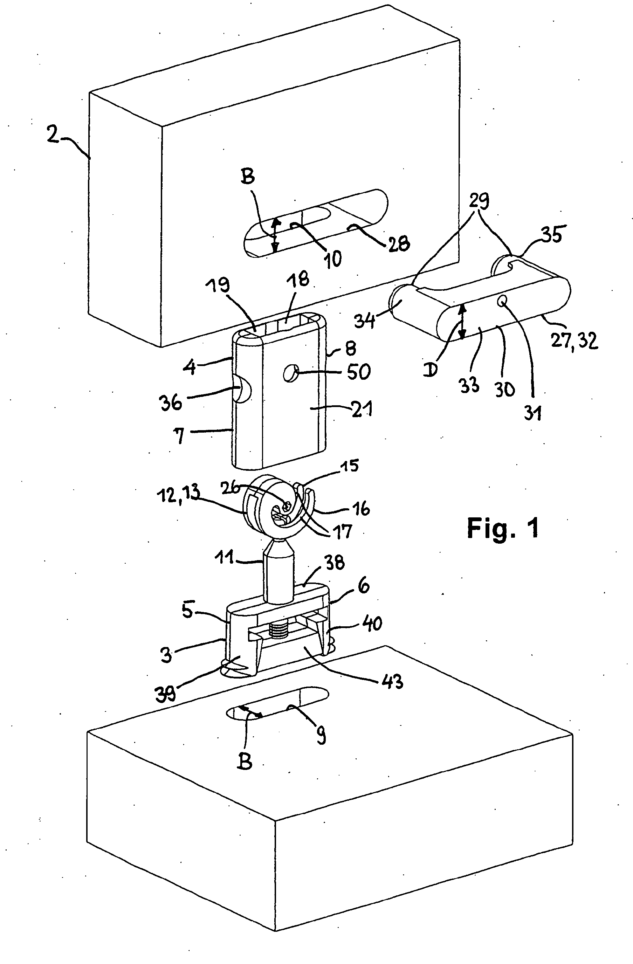

- Figur 1: eine erfindungsgemäße Beschlagvorrichtung mit den Möbelteilen in explodierter Darstellungsweise, wobei das in Gebrauchslage im zweiten Beschlagteil untergebrachte Spannelement außerhalb des zweiten Beschlagteils dargestellt und am Spannbolzen eingehängt gezeichnet ist,

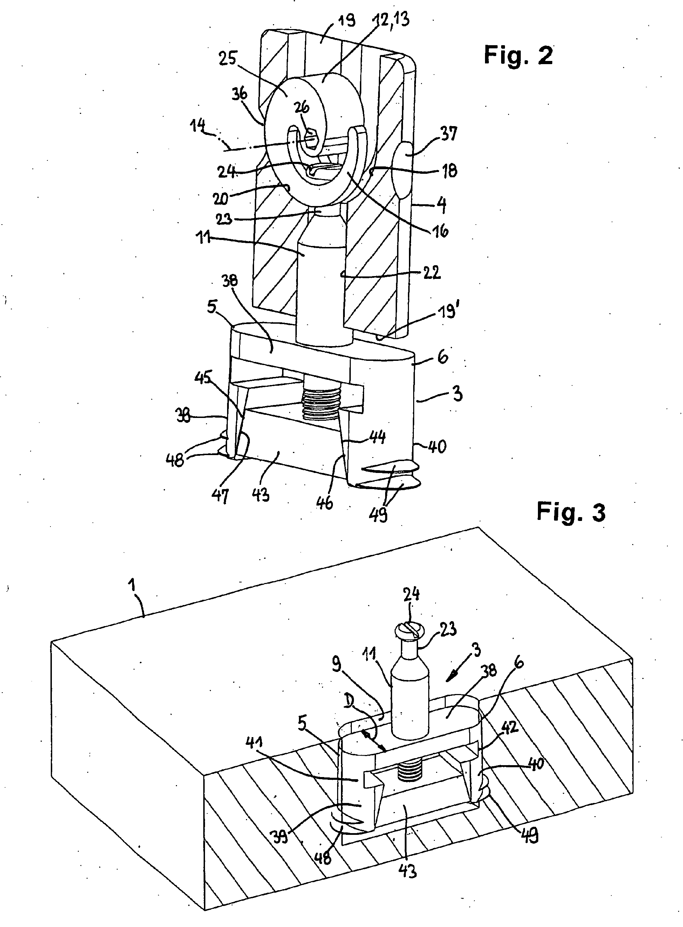

- Figur 2: die Beschlagvorrichtung ohne das Quersteckteil und ohne die Möbelteile in der Gebrauchslage in Schrägansicht, wobei das zweite Beschlagteil geschnitten dargestellt ist,
- Figur 3: das erste Beschlagteil in Schrägansicht im in die Aufnahmeausnehmung des betreffenden Möbelteils eingesetzten Zustand, wobei das Möbelteil geschnitten gezeigt ist,

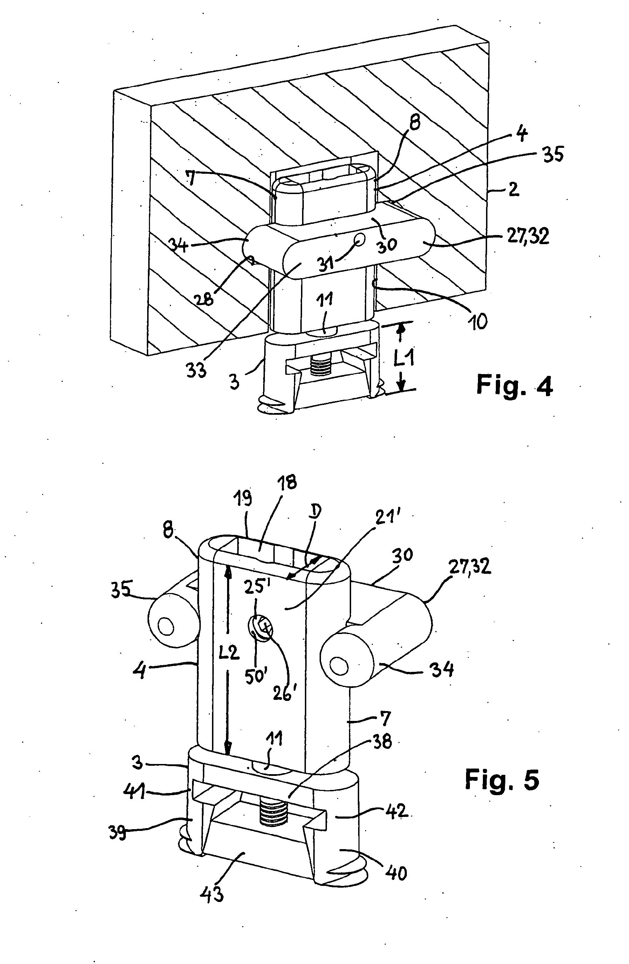

- Figur 4: die Beschlagvorrichtung in der Gebrauchslage, wobei das zweite Beschlagteil in das zugehörige, geschnitten dargestellte Möbelteil eingesetzt ist (das andere Möbelteil fehlt), und
- Figur 5: die Beschlagvorrichtung (ohne die Möbelteile) in der Figur 4 entsprechender Gebrauchslage von der entgegengesetzten Seite her gesehen.

Aus der Zeichnung geht eine Beschlagvorrichtung zum Verbinden von zwei Möbelteilen 1, 2 hervor. Bei den beiden Möbelteilen 1, 2 kann es sich beispielsweise um zwei rechtwinkelig zueinander stehende, plattenförmige Wandteile eines Schrankes handeln, die aus Holz oder holzartigem Material bestehen. Die Beschlagvorrichtung enthält ein erstes Beschlagteil 3 und ein zweites Beschlagteil 4, die jeweils einen länglichen Außenquerschnitt aufweisen. Dabei kann der Außenquerschnitt insbesondere rechteckig mit abgerundeten Schmalseiten 5, 6 (erstes Beschlagteil 3) bzw. 7, 8 (zweites Beschlagteil) sein.

Dem ersten Beschlagteil 3 ist eine Aufnahmeausnehmung 9 im einen Möbelteil 1 und dem zweiten Beschlagteil 4 eine Aufnahmeausnehmung 10 im anderen Möbelteil 2 zugeordnet. Die beiden Aufnahmeausnehmungen 9, 10 weisen eine im Querschnitt langlochartige Gestalt auf, so dass die Beschlagteile 3, 4 in sie eingesteckt werden können. Wiederum handelt es sich um einem im Wesentlichen rechteckigen Querschnitt mit abgerundeten Schmalseiten. Die Aufnahmeausnehmungen 9, 10 werden in das Material der Möbelteile 1, 2 eingefräst. In diesem Zusammenhang ist es zweckmäßig, dass die beiden Beschlagteile 3, 4 eine gleichgroße Dicke D aufweisen, so dass auch die beiden Aufnahmeausnehmungen 9, 10 mit gleicher Breite B, die der Dicke D entspricht, ausgeführt werden können. Die Fräsmaschine, mit der die beiden Aufnahmeausnehmungen 9, 10 gefräst werden, kann dann ohne Umrüsten zum Fräsen beiden Aufnahmeausnehmungen 9, 10 verwendet werden. Die Aufnahmeausnehmungen 9, 10 sind so tief, dass die Beschlagteile 3, 4 im Wesentlichen über ihre gesamte Länge L1 bzw. L2 oder etwas weiter eingesetzt werden können.

Die beiden Möbelteile 1, 2 werden so aneinander angesetzt, dass sich die beiden Aufnahmeausnehmungen 9, 10 und somit auch die beiden eingesteckten Beschlagteile 3, 4 gegenüberliegen.

Den beiden Beschlagteile 3, 4 sind im Einzelnen zu beschreibende Fixiermittel zugeordnet, mit denen sie im eingesteckten Zustand in den Aufnahmeausnehmungen 9, 10 festgelegt werden, so dass sie gegen ein Herausziehen aus den Aufnahmeausnehmungen 9, 10 gesichert sind.

Ferner sind ebenfalls im Einzelnen noch zu beschreibende Spannmittel vorhanden, mit denen die beiden Beschlagteile 3, 4 in Richtung aufeinander zu verspannt werden können. Im Zusammenhang mit den Fixiermitteln sind dann auch die beiden Möbelteile 1, 2 gegeneinander verspannt.

Die Spannmittel enthalten einen vom ersten Beschlagteil 3 zum zweiten Beschlagteil 4 hin abstehenden Spannbolzen 11 und ein im zweiten Beschlagteil 4 angeordnetes, dem Spannbolzen 11 zugeordnetes Spannelement 12, mit dem der Spannbolzen 11 und somit das erste Beschlagteil 3 gegen das zweite Beschlagteil 4 gezogen werden kann. Das Spannelement 12 ist zum Ausführen einer Spannbewegung im zweiten Beschlagteil 4 bewegbar gelagert und kann von außerhalb her betätigt werden. Dabei ist das Spannelement 12 in Richtung zum ersten Beschlagteil 3 hin abgestützt, so dass es beim Verspannen stehen bleibt.

Das Spannelement 12 ist zweckmäßigerweise ein verdrehbar im zweiten Beschlagteil 4 gelagertes Exzenterteil 13. Das Exzenterteil 13 stellt einen Drehriegel mit exzentrisch verlaufender Spannfläche dar. Hierzu weist das Exzenterteil 13 zwei in Richtung der nicht körperlichen Drehachslinie 14 des Exzenterteils 13 mit Abstand zueinander gabelartig angeordnete, in Drehrichtung verlaufende Spannfinger 15, 16 auf, deren radial innen angeordnete Innenseite 17 exzentrisch bogenförmig verläuft; so dass sie die bereits erwähnte Spannfläche bildet.

Das Exzenterteil 13 weist, sieht man vom den freien Enden der Spannfinger 15, 16 benachbarten Bereich ab, einen kreisförmigen Umfang auf. Das zweite Beschlagteil 4 enthält eine dem Exzenterteil 13 zugeordnete Lagerausnehmung 18, die zur Aufnahme und drehbaren Lagerung des Exzenterteils 13 dient. Die Lagerausnehmung 18 mündet an der dem ersten Beschlagteil 3 entgegengesetzten Stirnseite 19 des zweiten Beschlagteils 4 nach außen, so dass das Exzenterteil 13 von der Stirnseite 19 her in die Lagerausnehmung 18 eingesteckt wird, und zwar bevor man das zweite Beschlagteil 4 in die Aufnahmeausnehmung 10 einsetzt. Der halbkreisförmige untere Bereich 20 der Umfangswand der Lagerausnehmung 18 bildet das Drehlager für das Exzenterteil 13 und stützt das Exzenterteil 13 in Richtung zum ersten Beschlagteil 3 hin ab. Prinzipiell könnte die Lagerausnehmung an Stelle an der Stirnseite 19 auch an einer der Beschlagteil-Flachseiten 21, 21' ausmünden.

Nach dem Einsetzen des zweiten Beschlagteils 4 in die Aufnahmeausnehmung 10 wird die Mündung der Lagerausnehmung 18 durch das betreffende Möbelteil 2 überdeckt, so dass das Exzenterteil 13 im zweiten Beschlagteil 4 gesichert ist.

Die Drehachslinie 14 des Exzenterteils 13 verläuft quer zur Längsrichtung des Spannbolzens 11 und rechtwinkelig zu den Flachseiten 21, 21' des zweiten Beschlagteils 4.

Das zweite Beschlagteil 4 enthält ferner eine von seiner dem ersten Beschlagteil 3 zugewandten Stirnseite 19' ausgehende Steckausnehmung 22 zum Einstecken des Spannbolzens 11 bis zum vom Exzenterteil 13 gebildeten Spannelement 12. Die Steckausnehmung 22 steht in offener Verbindung mit der Lagerausnehmung 18.

Der Spannbolzen 11 weist an seinem vom ersten Beschlagteil abstehenden Endbereich anschließend an eine Halspartie 23 ein im Durchmesser mit Bezug auf die Halspartie 23 größeres Kopfstück 24 auf. Der Durchmesser der Halspartie 23 ist etwas kleiner als der Abstand der Spannfinger 15, 16 des Exzenterteils 13 voneinander. Bei der Montage wird das Exzenterteil 13 zunächst in eine solche Stellung gedreht, dass das Kopfstück 24 des Spannbolzens 11 an den freien Enden der Spannfinger 15, 16 vorbei gelangen kann. Nach dem entsprechend weiten Einstecken des Spannbolzens 11 in die Steckausnehmung 22 verdreht man das Exzenterteil 13, so dass die Halspartie 23 in den Zwischenraum zwischen den beiden Spannfingern 15, 16 eindringt und das Kopfstück 24 von der exzentrischen Innenseite 17 der Spannfinger 15, 16 untergriffen wird. Beim weiteren Verdrehen des Exzenterteils 13 gleiten die Spannfinger 15, 16 an der Unterseite des Kopfstücks 24 vorbei, so dass das Kopfstück 24 und mit diesem der Spannbolzen 11 und somit auch das erste Beschlagteil 3 aufgrund des exzentrischen Verlaufs der Spanfinger-Innenseite 17 zum zweiten Beschlagteil 4 hin gezogen und somit die beiden Möbelteile 1, 2 fest miteinander verspannt werden. Dabei stützt sich das Exzenterteil 13 am unteren Bereich 20 der Umfangswand der Lagerausnehmung 18 ab.

Das Exzenterteil 13 weist an seinen den Flachseiten 21, 21' des zweiten Beschlagteils 4 zugewandten Stirnseiten 25, 25' jeweils eine Drehmitnahmeeinrichtung 26, 26' beispielsweise in Gestalt eines Innenmehrkants oder eines Kreuzschlitzes zum Ansetzen eines Drehwerkzeugs auf. Ferner ist an den beiden Flachseiten 21, 21' des zweiten Beschlagteils 4, jeweils eine Betätigungsöffnung 50, 50' angeordnet, durch die hindurch das Drehwerkzeug zur betreffenden Drehmitnahmeeinrichtung gesteckt werden kann. Prinzipiell würde eine der beiden Drehmitnahmeeinrichtungen 26, 26' und Betätigungsöffnungen 50, 50' genügen.

Die Fixermittel zum Festlegen der Beschlagteile 3, 4 in den Aufnahmeausnehmungen 9, 10 enthalten bezüglich des zweiten Beschlagteils 4 ein Quersteckteil 27, das in eine quer zur betreffenden Aufnahmeausnehmung 10 gerichtete Fixierausnehmung 28 im zugeordneten Möbelteil 2 gesteckt wird. Das Quersteckteil 27 weist eine Eingriffspartie 29 auf, mit der das Quersteckteil 27 im eingesteckten Zustand in Steckeingriff mit dem zweiten Beschlagteil 4 steht. Dabei bildet das Quersteckteil 27 außerdem eine Lagerpartie 30, die im eingesteckten Zustand in der Fixierausnehmung 28 des Möbelteils 2 angeordnet ist. Auf diese Weise wird ein vom Spannbolzen 11 her auf das zweite Beschlagteil 4 ausgeübte Kraft über das Quersteckteil 27 von der Wandung der Fixierausnehmung 28 und somit vom Möbelteil 2 aufgenommen, so dass das zweite Beschlagteil 4 beim Verspannen seine durch das Quersteckteil 27 vorgegebene Längslage beibehält.

Das Quersteckteil 27 wird von der Seite her eingesteckt. Dabei ist die Anordnung so getroffen, dass sich im eingesteckten Zustand des Quersteckteils 27 dessen Lagerpartie 30 mindestens teilweise über die zugewandte Flachseite 21 des zweiten Beschlagteils 4 erstreckt. Damit das Exzenterteil 13 bei eingestecktem Quersteckteil 27 verdreht werden kann, ist das Quersteckteil 27 so ausgebildet, dass die zugewandte Betätigungsöffnung 50 des zweiten Beschlagteils 4 und somit die Drehmitnahmeeinrichtung 26 des Exzenterteils 13 von außen her zugänglich ist. Hierzu weist beim Ausführungsbeispiel das Quersteckteil 27 eine Durchtrittsausnehmung 31 auf, durch die das Drehwerkzeug eingeführt werden kann. Die Anordnung könnte auch so getroffen sein, dass die Drehmitnahmeeinrichtung 26 am Quersteckteil vorbei zugänglich ist.

Das Quersteckteil 27 wird zweckmäßigerweise von einem U-artigen Steckbügel 32 mit einem Bügelsteg 33 und zwei vom Bügelsteg 33 abstehenden Bügelschenkeln 34, 35 gebildet, wobei die beiden Bügelschenkel 34, 35 zusammen die Eingriffspartie 29 bilden und mit dem zweiten Beschlagteil 4 in Steckeingriff gelangen. Der Bügelsteg 33 bildet die Lagerpartie 30.

Wie aus der Zeichnung ersichtlich ist, weist das zweite Beschlagteil 4 außen an seinen Schmalseiten 7, 8 jeweils eine eingeformte Vertiefung 36, 37 für den Eingriff der Bügelschenkel 34, 35 auf.

Das Quersteckteil 27 und die Fixierausnehmung 28 im betreffenden Möbelteil 2 weisen eine aneinander angepasste Gestalt auf. Dabei ist das Quersteckteil 27 länglich ausgebildet und weist einen Außenquerschnitt auf, der einem Rechteck mit abgerundeten Schmalseiten entspricht. An diesen Schmalseiten stehen die Bügelschenkel 34, 35 ab. Die Fixierausnehmung 38 ist im Querschnitt entsprechend langlochartig geformt. Zweckmäßigerweise weist das Quersteckteil 27 eine Dicke D auf, die der Dicke D der beiden Beschlagteile 3, 4 entspricht. Auf diese Weise kann die Fixierausnehmung 28 die gleiche Breite B wie die Aufnahmeausnehmungen 9, 10 aufweisen, so dass auch die Fixierausnehmung 28 mit der gleichen Fräsmaschine ohne Umrüsten eingebracht werden kann.

Bezüglich der Fixierung des ersten Beschlagteils 3 in der Aufnahmeausnehmung 9 des Möbelteils 1 kann vorgesehen sein, dass das erste Beschlagteil 3 eine quer zum Spannbolzen 11 verlaufenden Stegpartie 38 und zwei an den Enden der Stegpartie 38 bei den Schmalseiten 5, 6 in Richtung entgegengesetzt zum Spannbolzen 11 abstehende Beschlagteilschenkel 39, 40 aufweist. Die Beschlagteilschenkel 39, 40 sind so ausgebildet, dass sie in Richtung voneinander weg spreizbar sind. Dies kann beispielsweise dadurch verwirklicht werden, dass die Beschlagteilschenkel 39, 40 an einer Sollbiegestelle 41, 42 entsprechend schmalwandig ausgebildet sind oder über eine solche Sollbiegestelle mit der Stegpartie 38 verbunden sind. Der Spannbolzen 11 durchgreift die Stegpartie 38 und trägt ein zwischen den Beschlagteilschenkeln 39, 40 angeordnetes Spreizstück 43, das über Keilflächen 44, 45, 46, 47 gegen die beiden Beschlagteilschenkel 39, 40 wirkt. Dabei liegen die beiden Keilflächen 44, 45 des Spreizstücks 43 an den beiden Keilflächen 46, 47 der Beschlagteilschenkeln 39, 40 an. Der Spannbolzen 11 ist verdrehbar an der Stegpartie 38 gelagert und steht mit dem Spreizstück 43 in Gewindeeingriff, so dass das Spreizstück 43 durch Verdrehen des Spannbolzens 11 in Längsrichtung des Spannbolzens 11 und somit entlang den Beschlagteilschenkeln 39, 40 verlagert wird. Verdreht man im dargestellten Falle den Spannbolzen 11 so, dass sich das Spreizstück 43 zur Stegpartie 38 hin bewegt, werden die beiden Beschlagteilschenkel 39, 40 voneinander weg gedrückt und werden somit auseinander gespreizt, so dass sie gegen die zugewandten Schmalseiten der Aufnahmeausnehmung 9 des Möbelteils 1 gedrückt werden.

Die Anordnung könnte auch umgekehrt so sein, dass die Beschlagteilschenkel beim Bewegen des Spreizstücks von der Stegpartie weg auseinandergespreizt werden. In diesem Falle müssten die Keilflächen entgegengesetzt als dargestellt geneigt sein.

Prinzipiell könnte auch nur einer der Beschlagteilschenkel 39; 40 spreizbar angeordnet sein.

Ferner könnte an Stelle einer Spreizbewegung des mindestens einen Beschlagteilschenkels 39, 40 auch eine andere Bewegung vorgesehen sein, durch die der jeweilige Beschlagteilschenkel 39, 40 gegen die Wandung der Aufnahmeausnehmung 9 gedrückt wird.

Die Beschlagteilschenkel 39, 40 weisen an ihren einander entgegengesetzten Außenseite beispielsweise zahnartige Verankerungsvorsprünge 48, 49 auf, die in das Material des betreffenden Möbelteils 1 eingedrückt werden.

Das erste Beschlagteil 3 wird somit fest in der Aufnahmeausnehmung 9 gehalten.

Es versteht sich, dass es prinzipiell auch möglich wäre, dass der Spannbolzen 11 mit der Stegpartie 38 in Gewindeeingriff steht und verdrehbar mit dem Spreizstück 43 verbunden ist. In diesem Falle würde sich allerdings beim Fixieren des ersten Beschlagteils 3 der Spannbolzen 11 verlagern.

## Patentansprüche

1. Beschlagvorrichtung zum Verbinden von zwei Möbelteilen, mit einem ersten Beschlagteil und einem zweiten Beschlagteil, die Aufnahmeausnehmung des jeweiligen Möbelteils eingesetzt werden, wobei den beiden Beschlagteilen Fixiermittel zu ihrem Festlegen in den Aufnahmeausnehmungen der Möbelteils und Spannmittel zum Verspannen der beiden Beschlagteile in Richtung aufeinander zu zugeordnet sind, wobei die Spannmittel einen vom ersten Beschlagteil (3) abstehenden Spannbolzen (11) und ein im zweiten Beschlagteil (4) angeordnetes, dem Spannbolzen (11) zugeordnetes Spannelement (12) enthalten, wobei das Spannelement (12) zum Ausführen einer Spannbewegung im zweiten Beschlagteil (4) bewegbar gelagert ist, von außerhalb betätigbar ist und zumindest in Richtung zum ersten Beschlagteil (3) hin abgestützt ist, und wobei das zweite Beschlagteil (4) eine von seiner dem ersten Beschlagteil (3) zugewandten Stirnseite ausgehende Steckausnehmung (22) zum Einstecken des Spannbolzens (11) bis zum Spannelement (12) enthält, derart, dass der Spannbolzen (11) und mit diesem das erste Beschlagteil (3) nach dem Einstecken des Spannbolzens (11) durch Betätigen des Spannelements (12) gegen das zweite Beschlagteil (4) lösbar spannbar ist, **dadurch gekennzeichnet, dass** das erste Beschlagteil (3) und das zweite Beschlagteil (4) einen länglichen Außenquerschnitt zum Einsetzen in die jeweils im Querschnitt langlochartigen Aufnahmeausnehmung aufweisen, und dass das erste Beschlagteil (3) mindestens einen bewegbar am ersten Beschlagteil (3) gelagerten Beschlagteilschenkel (39, 40) aufweist, der im in die Aufnahmeausnehmung (9) des betreffenden Möbelteils (1) eingesetzten Zustand gegen die Wandung der Aufnahmeausnehmung (9) drückbar ist.

2. Beschlagvorrichtung nach Anspruch 1, **dadurch gekennzeichnet, dass** der mindestens eine Beschlagteilschenkel (39, 40) nach außen spreizbar am ersten Beschlagteil (3) angeordnet ist.

3. Beschlagvorrichtung nach Anspruch 2, **dadurch gekennzeichnet, dass** das erste Beschlagteil (3) eine quer zum Spannbolzen (11) verlaufenden Stegpartie (38) und zwei an den Enden der Stegpartie (38) in Richtung entgegengesetzt zum Spannbolzen (11) abstehende, voneinander weg spreizbare Beschlagteilschenkel (39, 40) aufweist, wobei der Spannbolzen (11) die Stegpartie (38) durchgreift und ein zwischen den Beschlagteilschenkeln (39, 40) angeordnetes, über Keilflächen (44, 45, 46, 47) gegen die beiden Beschlagteilschenkel (39, 40) wirkendes Spreizstück (43) trägt, wobei der Spannbolzen (11) entweder verdrehbar an der Stegpartie (38) gelagert und mit dem Spreizstück (43) in Gewindeeingriff steht oder mit der Stegpartie in Gewindeeingriff steht und verdrehbar mit dem Spreizstück verbunden ist.

4. Beschlagvorrichtung nach einem der vorhergehenden Ansprüche, **dadurch gekennzeichnet, dass** der mindestens eine Beschlagteilschenkel (39, 40) an seiner Außenseite mindestens einen in die Wandung der betreffenden Aufnahmeausnehmung (9) eindringenden verankerungsvorsprung (48, 49) aufweist.

5. Beschlagvorrichtung nach einem der vorhergehenden Ansprüche, **dadurch gekennzeichnet, dass** das Spannelement (12) ein verdrehbar im zweiten Beschlagteil (4) gelagertes Exzenterteil (13) ist.

6. Beschlagvorrichtung nach Anspruch 5, **dadurch gekennzeichnet, dass** das zweite Beschlagteil (4) eine von außen her zugängliche, im Beschlaginneren in offener Verbindung mit der Steckausnehmung (22) stehende Lagerausnehmung (18) zur Aufnahme und drehbaren Lagerung des Exzenterteils (13) enthält.

7. Beschlagvorrichtung nach Anspruch 5 oder 6, **dadurch gekennzeichnet, dass** das verdrehbar gelagerte Exzenterteil (13) zwei gabelartig mit Abstand zueinander angeordnete, in Drehrichtung verlaufende Spannfinger (15, 16) mit exzentrisch verlaufender Innenseite (17) aufweist, und dass der Spannbolzen (11) anschließend an eine zwischen den Spannfingern (15, 16) hindurch passende Halspartie (23) ein Kopfstück (24) mit einem mit Bezug auf den Abstand der Spannfinger (15, 16) voneinander größeren Durchmesser aufweist.

8. Beschlagvorrichtung nach einem der Ansprüche 5 bis 7, **dadurch gekennzeichnet, dass** das verdrehbar gelagerte Exzenterteil (13) an mindestens einer seiner Stirnseiten (25) eine von außerhalb des zweiten Beschlagteils (4) her zugängliche Drehmitnahmeeinrichtung (26) zum Ansetzen eines Drehwerkzeugs aufweist.

9. Beschlagvorrichtung nach einem der vorhergehenden Ansprüche, **dadurch gekennzeichnet, dass** dem zweiten Beschlagteil (4) zu seinem Festlegen in der Aufnahmeausnehmung (10) des betreffenden Möbelteils (2) ein Quersteckteil (27) zugeordnet ist, das in eine quer zur Aufnahmeausnehmung (10) gerichtete Fixierausnehmung (28) im betreffenden Möbelteil (2) steckbar ist und im eingesteckten Zustand mit einer Eingriffspartie (29) mit dem zweiten Beschlagteil (4) in Steckeingriff steht und mit einer Lagerpartie (30) in der Fixierausnehmung (28) angeordnet ist.

10. Beschlagvorrichtung nach Anspruch 9, **dadurch gekennzeichnet, dass** sich im eingesteckten Zustand des Quersteckteils (27) die Lagerpartie (30) mindestens teilweise über die zugewandte Flachseite (21) des zweiten Beschlagsteils (4) erstreckt.

11. Beschlagvorrichtung nach Anspruch 10, **dadurch gekennzeichnet, dass** die Drehmitnahmeeinrichtung (26) des Exzenterteils (13) an dem Quersteckteil (27) vorbei oder durch das Quersteckteil (27) hindurch von außen her zugänglich ist.

12. Beschlagvorrichtung nach einem der Ansprüche 9 bis 11 **dadurch gekennzeichnet, dass** das Quersteckteil (27) von einem U-artigen Steckbügel (32) mit einem Bügelsteg (33) und zwei vom Bügelsteg (33) abstehenden Bügelschenkeln (34 35) gebildet wird, wobei die beiden Bügelschenkel (34, 35) mit dem zweiten Beschlagteil (4) in Eingriff gelangen und der Bügelsteg (33) die Lagerpartie (30) bildet.

13. Beschlagvorrichtung nach Anspruch 12, **dadurch gekennzeichnet, dass** das zweite Beschlagteil (4) außen an seinen Schmalseiten (7, 8) jeweils eine eingeformte Vertiefung (36, 37) für den Eingriff der Bügelschenkel (34, 35) aufweist.

14. Beschlagvorrichtung nach einem der Ansprüche 7 bis 11, **dadurch gekennzeichnet, dass** das Quersteckteil (27) eine längliche, durch die einen langlochartigen Querschnitt aufweisende Fixierausnehmung (28) passende Gestalt aufweist.

15. Beschlagvorrichtung nach einem der Ansprüche 1 bis 14, **dadurch gekennzeichnet, dass** die beiden Beschlagteile (3, 4) und das gegebenenfalls vorhandene Quersteckteil (27) eine im Wesentlichen gleiche Dicke (d) aufweisen.

## Claims

1. Fitting device for joining two furniture components, with a first fitting part and a second fitting part which are installed into location recesses of the respective furniture component, wherein the two fitting parts are provided with fixing means for securing them in the location recesses of the furniture components, and with clamping means for clamping the two fitting parts towards one another, wherein the clamping means comprise a clamping bolt (11) projecting from the first fitting part (3) and a clamping element (12) located in the second fitting part (4) and assigned to the clamping bolt (11), wherein the clamping element (12) is movably mounted in the second fitting part (4) to perform a clamping movement, can be operated from outside and is supported at least towards the first fitting part (3), and wherein the second fitting part (4) is provided with a plug-in recess (22) originating from its end face facing the first fitting part (3) for the insertion of the clamping bolt (11) up to the clamping element (12), so that the first fitting part (3), following the insertion of the clamping bolt (11), can be releasably clamped against the second fitting part (4) by operating the clamping element (12), **characterised in that** the first fitting part (3) and the second fitting part (4) have oblong external cross-sections for insertion into the location recesses with their slot-like cross-sections, and **in that** the first fitting part (3) comprises at least one fitting part leg (39, 40) movably mounted on the first fitting part (3), which can be pressed against the wall of the location recess (9) when installed into the location recess (9) of the respective furniture component (1).

2. Fitting device according to claim 1, **characterised in that** the at least one fitting part leg (39, 40) is so mounted on the first fitting part (3) that it is capable of outward expansion.

3. Fitting part according to claim 2, **characterised in that** the first fitting part (3) comprises a web section (38) extending at right angles to the clamping bolt (11) and two fitting part legs (39, 40) projecting from the ends of the web section (38) in the direction opposite to the clamping bolt (11) and capable of being spread away from one another, wherein the clamping bolt (11) passes through the web section (38) and supports an expander piece (43) located between the fitting part legs (39, 40) and acting against the two fitting part legs (39, 40) by way of wedge surfaces (44, 45, 46, 47), wherein the clamping bolt (11) is either rotatably mounted on the web section (38) and in threaded engagement with the expander piece (43) or in threaded engagement with the web section and rotatably joined to the expander piece.

4. Fitting device according to any of the preceding claims, **characterised in that** the at least one fitting part leg (39, 40) has on its outside at least one anchoring projection (48, 49) penetrating the wall of the respective location recess (9).

5. Fitting device according to any of the preceding claims, **characterised in that** the clamping element (12) is an eccentric part (13) rotatably mounted in the second fitting part (4).

6. Fitting device according to claim 5, **characterised in that** the second fitting part (4) has a bearing recess (18) accessible from outside and in open connection with the plug-in recess (22) for the location and rotatable mounting of the eccentric part (13).

7. Fitting device according to claim 5 or 6, **characterised in that** the rotatably mounted eccentric part (13) comprises two clamping fingers (15, 16) spaced in the manner of a fork and extending in the direction of rotation and having an eccentrically extending inside (17), and **in that** the clamping bolt (11) comprises, adjoining to a neck section (23) passing between the clamping fingers (15, 16), a head piece (24) with a diameter greater than the mutual distance of the clamping fingers (15, 16).

8. Fitting device according to any of claims 5 to 7, **characterised in that** the rotatably mounted eccentric part (13) comprises on at least one of its end faces (25) a rotary driver device (26) accessible from outside the second fitting part (4) for the application of a turning tool.

9. Fitting device according to any of the preceding claims, **characterised in that** a cross plug-in part (27), which is insertable into a fixing recess (28) oriented at right angles to the location recess (10) in the respective furniture component (2) and which in the inserted state is in engagement with the second fitting part (4) by way of an engagement section (29) and located in the fixing recess (28) by way of a bearing section (30), is assigned to the second fitting part (4) for its location in the location recess (10) of the respective furniture component (2).

10. Fitting device according to claim 9, **characterised in that** the bearing section (30) extends at least partially over the adjacent flat side (21) of the second fitting part (4) in the inserted state of the cross plug-in part (27).

11. Fitting device according to claim 10, **characterised in that** the rotary driver device (26) of the eccentric part (13) is accessible from outside past the cross plug-in part (27) or through the cross-plug-in part (27).

12. Fitting device according to any of claims 9 to 11, **characterised in that** the cross plug-in part (27) is represented by a U-shaped clevis (33) with a clevis web (33) and two clevis legs (34, 35) projecting from the clevis web (33), the two clevis legs (34, 35) coming into engagement with the second fitting part (4), while the clevis web (33) forms the bearing section (30).

13. Fitting device according to claim 12, **characterised in that** the second fitting part (4) has an integral indentation (36, 37) in each of its narrow sides (7, 8) for the engagement of the two clevis legs (34, 35).

14. Fitting device according to any of claims 7 to 11, **characterised in that** the cross-plug-in part (27) has an oblong shape fitting through the fixing recess (28) with its slot-like cross-section.

15. Fitting device according to any of claims 1 to 14, **characterised in that** the two fitting parts (3, 4) and the cross plug-in part (27), if provided, have a substantially equal thickness (d).

## Revendications

1. Dispositif d'armature destiné à relier deux parties de meuble, comprenant une première partie d'armature et une seconde partie d'armature, qui sont insérées dans l'évidement de réception de la partie de meuble respective, sachant qu'aux deux parties d'armature doivent être associés des moyens de fixation destinés à les fixer dans les évidements de réception de la partie de meuble et des moyens de serrage destinés à haubaner les deux parties d'armature l'une vers l'autre, les moyens de serrage contenant un boulon de serrage (11) en saillie de la première partie d'armature (3) et un élément de serrage (12) disposé dans la seconde partie d'armature (4), associé au boulon de serrage (11), l'élément de serrage (12) étant logé de manière mobile dans la seconde partie d'armature (4) pour exécuter un déplacement de serrage, pouvant être actionné de l'extérieur et étant soutenu au moins en direction de la première partie d'armature (3), et la seconde partie d'armature (4) contenant un évidement d'emboîtement (22) partant de sa face frontale tournée vers la première partie d'armature (3), destiné à emboîter le boulon de serrage (11) jusqu'à l'élément de serrage (12), de telle sorte que le boulon de serrage (11) et avec celui-ci la première partie d'armature (3), une fois le boulon de serrage (11) emboîté, peut être serré de manière détachable contre la seconde partie d'armature (4) en actionnant l'élément de serrage (11), **caractérisé en ce que** la première partie d'armature (3) et la seconde partie d'armature (4) comprennent une section transversale extérieure longitudinale afin d'être insérées dans l'évidement de réception respectif de type trou oblong en section transversale, et **en ce que** la première partie d'armature (3) comprend au moins une branche de partie d'armature (39, 40) logée de manière mobile sur la première partie d'armature (3), laquelle branche, dans l'état inséré dans l'évidement de réception (9) de la partie de meuble (1) correspondante, peut être pressée contre la paroi de l'évidement de réception (9).

2. Dispositif d'armature selon la revendication 1, **caractérisé en ce que** la au moins une branche de partie d'armature (39, 40) est disposée sur la première partie d'armature (3) de manière à pouvoir être écartée vers l'extérieur.

3. Dispositif d'armature selon la revendication 2, **caractérisé en ce que** la première partie d'armature (3) comprend une partie formant nervure (38) s'étendant transversalement au boulon de serrage (11) et deux branches de partie d'armature (39, 40) en saillie sur les extrémités de la partie formant nervure (38) dans une direction opposée au boulon de serrage (11), pouvant être écartées l'une de l'autre, le boulon de serrage (11) traversant la partie formant nervure (38) et portant une pièce d'écartement (43) disposée entre les branches de partie d'armature (39, 40), agissant sur les surfaces cunéiformes (44, 45, 46, 47) contre les deux branches de partie d'armature (39, 40), le boulon de serrage (11) étant soit logé de manière rotative sur la partie de nervure (38) et en prise filetée avec la pièce d'écartement (43) soit en prise filetée avec la partie formant nervure et relié de manière rotative à la pièce d'écartement.

4. Dispositif d'armature selon l'une quelconque des revendications précédentes, **caractérisé en ce que** la au moins une branche de partie d'armature (39, 40) comprend sur sa face extérieure au moins une saillie d'ancrage (48, 49) pénétrant dans la paroi de l'évidement de réception (9) correspondant.

5. Dispositif d'armature selon l'une quelconque des revendications précédentes, **caractérisé en ce que** l'élément de serrage (12) est une partie excentrique (13) logée de manière rotative dans la seconde partie d'armature (4).

6. Dispositif d'armature selon la revendication 5, **caractérisé en ce que** la seconde partie d'armature (4) contient un évidement de logement (18) accessible de l'extérieur, en liaison ouverte à l'intérieur de l'armature avec l'évidement d'emboîtement (18) et destiné à recevoir et loger de manière rotative la partie excentrique (13).

7. Dispositif d'armature selon la revendication 5 ou 6, **caractérisé en ce que** la partie excentrique (13) logée de manière rotative comprend deux doigts de serrage (15, 16) écartés l'un de l'autre à la façon d'une fourche, s'étendant dans le sens rotationnel, dotés d'une face intérieure (17) s'étendant de façon excentrique, et **en ce que** le boulon de serrage (11) comprend, après une partie de col (23) pouvant passer entre les doigts de serrage (15, 16), une pièce de tête (24) présentant un diamètre supérieur à l'écart entre les doigts de serrage (15, 16).

8. Dispositif d'armature selon l'une quelconque des revendications 5 à 7, **caractérisé en ce que** la partie excentrique (13) logée de manière rotative comprend sur au moins une de ses faces frontales (25) un système d'entraînement rotatif (26) accessible depuis l'extérieur de la seconde partie d'armature (26), destiné à mettre en place un outil de tournage.

9. Dispositif d'armature selon l'une quelconque des revendications précédentes, **caractérisé en ce qu'**une partie d'emboîtement transversal (27), qui peut être emboîtée dans un évidement de fixation (28) orienté transversalement à l'évidement de réception (10) dans la partie de meuble (2) correspondante, et, dans l'état emboîté avec une partie de mise en prise (29), est en prise d'emboîtement avec une seconde partie d'armature (4) et est disposée avec une partie de logement (30) dans l'évidement de fixation (28), est associée à la seconde partie d'armature (4) pour fixer celle-ci dans l'évidement de réception (10) de la partie de meuble (2) correspondante.

10. Dispositif d'armature selon la revendication 9, **caractérisé en ce que** dans l'état emboîté de la partie d'emboîtement transversal (27), la partie de logement (30) s'étend au moins en partie au-dessus de la face plate orientée (21) de la seconde partie d'armature (4).

11. Dispositif d'armature selon la revendication 10, **caractérisé en ce que** le dispositif d'entraînement rotatif (26) de la partie excentrique (13) est accessible de l'extérieur en passant devant la partie d'emboîtement transversal (27) ou à travers la partie d'emboîtement transversal (27).

12. Dispositif d'armature selon l'une quelconque des revendications 9 à 11, **caractérisé en ce que** la partie d'emboîtement transversal (27) est formée par un étrier d'emboîtement en forme de U (32) doté d'une nervure d'étrier (33) et de deux branches d'étrier (34, 35) en saillie de la nervure d'étrier (33), les deux branches d'étrier (34, 35) parvenant en prise avec la seconde partie d'armature (4) et la nervure d'étrier (33) formant la partie de logement (30).

13. Dispositif d'armature selon la revendication 12, **caractérisé en ce que** la seconde partie d'armature (4) comprend à l'extérieur sur ses faces étroites (7, 8) respectivement un creux mis en forme (36, 37) pour la mise en prise des branches d'étrier (34, 35).

14. Dispositif d'armature selon l'une quelconque des revendications 7 à 11, **caractérisé en ce que** la partie d'emboîtement transversal (27) comprend une forme longitudinale, s'adaptant à travers un évidement de fixation (28) comprenant une section transversale de type trou oblong.

15. Dispositif d'armature selon l'une quelconque des revendications 1 à 14, **caractérisé en ce que** les deux parties d'armature (3, 4) et la partie d'emboîtement transversal (27) éventuellement présente comprennent une épaisseur (d) sensiblement identique.
